# EUROPÄISCHE PATENTANMELDUNG

(11) **EP 0 870 423 A1**
(43) Veröffentlichungstag der Anmeldung: **14.10.1998**
(21) Anmeldenummer: 98106106.2
(22) Anmeldetag: 03.04.1998
(51) Int. Cl.: A01C 17/00

(54) **Verfahren zum Ausbringen einer einzingen Düngersorte oder von gleichzeitig mehreren Düngersorten mit einem Schleuderdüngerstreuer**

(30) Priorität: 10.04.1997 DE 19714932; 10.04.1997 DE 19714933; 10.04.1997 DE 19714931
(71) Anmelder: Amazonen-Werke H. Dreyer GmbH & Co. KG, D-49205 Hasbergen (DE)
(72) Erfinder: Dreyer, Heinz Dr. Dipl.-Ing., 49205 Hasbergen (DE)

(57) **Zusammenfassung**

Verfahren zum Ausbringen einer einzigen Düngersorte oder von gleichzeitig mehreren Düngersorten mit einem Schleuderstreuer, der zumindest zwei Vorratsbehälter (1,2,41,42,43) mit zumindest vier Dosierorganen (23), denen jeweils eine Schleuderscheibe (18) zugeordnet ist, aufweist, wobei die Schleuderscheiben (18) gegen anders ausgebildete Schleuderscheiben und/oder die auf den Schleuderscheiben (18) angeordneten Wurfschaufeln (19) gegen anders ausgebildete Wurfschaufeln auswechselbar und/oder austauschbar sind, wobei die Dosierorgane (23) mittels Stellorganen (26) gemeinsam oder unabhängig voneinander verstellbar sind. Beim Ausbringen einer Düngersorte sind derartige Schleuderscheiben (18) und/oder Wurfschaufeln (19) vorgesehen, daß der Dünger in vier aneinander angrenzenden und teilweise überlappenden Arbeitsbreitenstreifen ausgestreut wird. Beim gleichzeitigen Ausbringen von zwei verschiedenen Düngersorten sind derartige Schleuderscheiben (18) und/oder Wurfschaufeln (19) vorgesehen, daß jede Düngersorte in zwei aneinander angrenzenden und teilweise überlappenden Arbeitsbreitenstreifen ausgestreut wird.

Schleuderdüngerstreuer mit zumindest zwei Vorratsbehältern (1,2,41,42,43) für die getrennte Mitführung von zumindest zwei verschiedenen Düngersorten, wobei jedem Vorratsbehälter jeweils zumindest zwei eigene Dosierorgane (23) und zumindest zwei eigene Verteilorgane (18) zugeordnet sind, wobei das jeweilige Dosierorgan dem ihm zugeordneten Verteilorgan den auszubringenden Dünger in einstellbarer Weise zuleitet, wobei die verschiedenen Düngersorten von jeweils verschiedenen Verteilorganen verteilt werden, wobei die die verschiedenen Düngersorten verteilenden Verteilorganen in unterschiedlichen Höhen zueinander angeordnet sind. Die das Material auf die unteren Schleuderscheiben leitende Elemente (28) enden unterhalb der oberen Schleuderscheiben innerhalb der von den äußersten Teilen der Schleuderscheiben beschriebenen Umlaufbahnen. Die Dosierorgane (23) sind als Auslauföffnungen und die Auslauföffnungen verschließbare und einstellbare Schieber (25) mit zugeordneten einstellbaren Anschlagelementen (26) zur Bestimmung der Öffnungsweiten der Auslauföffnungen ausgebildet.

## Beschreibung

Die Erfindung betrifft ein Verfahren gemäß des Oberbegriffes des Patentanspruches 1.

Ein derartiges Verfahren ist in der EP-02 46 575 A2 beschrieben.

Der Erfindung liegt die Aufgabe zugrunde, entsprechende Verfahrensschritte zum wahlweisen Ausbringen von einer oder mehreren Materialsorten vorzuschlagen.

Diese Aufgabe wird erfindungsgemäß durch die kennzeichnenden Merkmale des Anspruches 1 gelöst. Infolge dieser Maßnahmen können mit ein und demselben Schleuderdüngerstreuer eine einzige Düngersorte oder mehrere Düngersorten in vorteilhafter Weise ausgebracht werden. Hierbei ist es möglich, den Dünger über verschiedene Breiten auszubringen.

Beim Ausbringen einer einzigen Düngersorte ist in vorteilhafter Weise vorgesehen, daß die oberen Schleuderscheiben den inneren Arbeitsbreitenbereich und die unteren Schleuderscheiben den äußeren Arbeitsbreitenbereich bestreuen. Es kann jedoch auch vorgesehen sein, daß für das Ausstreuen einer einzigen Düngersorte die oberen Schleuderscheiben den äußeren Arbeitsbreitenbereich und die unteren Schleuderscheiben den inneren Arbeitsbreitenbereich bestreuen.

Desweiteren ist vorgesehen, daß für das Ausstreuen einer einzigen Düngersorte andere Schleuderscheiben- und/oder Wurfschaufelsätze als für das Ausstreuen von zwei Düngersorten vorgesehen sind.

Desweiteren wird eine vorteilhafte Bauweise eines Schleuderdüngerstreuers vorgeschlagen. Hierbei ist vorgesehen, daß die Dosierorgane als Auslauföffnungen und die Auslauföffnungen verschließbare und einstellbare Schieber mit zugeordneten einstellbaren Elementen zur Bestimmung der Öffnungsweite der Auslauföffnungen ausgebildet sind, und daß die Dosierorgane in ihrer Ausbildung und Zuordnung zu den Verteilorganen denen von Schleuderdüngerstreuern aus Großserien entsprechen. Infolge dieser Maßnahmen werden Dosierorgane und Verteilelemente von Düngerstreuern aus Großserien eingesetzt. Durch die Übernahme dieser sich in Großserien bewerten Bauteile werden enorme Kosten bei der Entwicklung eines Mehrsortendüngerstreuers eingespart, weil sämtliche Zuordnungen und Einstellungen von der Großserienmaschine übernommen werden. Weiterhin ist vorteilhaft, daß hierdurch spätere Betreuungs- und Folgekosten eingespart werden, weil direkt die Einstelldaten der Großserienmaschinen übernommen bzw. übertragen werden können. Hierbei ist auch von Vorteil, daß auf die Daten aus Datenbanken zurückgegriffen werden kann, aufgrund welcher Einstellempfehlungen für die Einstellung der Maschine gegeben werden können. Dieses bedeutet, daß keine aufwendigen Entwicklungen der Zuordnung von Dosierorgan zu Verteilorgan durchgeführt und die entsprechenden Einstellungen für die Dosier- und Verteilorgane nicht ermittelt werden müssen.

Weiterhin ist vorgesehen, daß Dosierorgane mit verschiedenartigen Betätigungselementen von Schleuderdüngerstreuers aus Großserien an den Vorratsbehältern anbringbar sind. Hierdurch kann der Düngerstreuer entsprechend den individuellen Wünschen des Landwirtes einfach ausgerüstet werden.

Dadurch, daß die Lage der Auslauföffnungen zu den als Schleuderscheiben ausgebildeten Verteilorganen entsprechend der Ausbildung der Dosierorgane von Schleuderdüngerstreuern aus Großserien entspricht, können diese Bauteile einfach auf den erfindungsgemäßen Schleuderstreuer übertragen werden.

Als besonders vorteilhaft hat sich bei Versuchen gezeigt, daß bei Schleuderdüngerstreuern, bei denen die äußeren oder hinteren Schleuderscheiben und die zugeordneten Dosierorgane höher als die mittleren oder vorderen Schleuderscheiben und deren zugeordneten Dosierorgane angeordnet sind, die Schleuderscheiben und/oder die Wurfschaufeln derart ausgebildet sind, daß sie die Düngerpartikel mit einem Winkel zur Horizontalen nach schräg oben abschleudern.

Um bei Schleuderdüngerstreuern, bei denen die äußeren oder hinteren Schleuderscheiben und die zugeordneten Dosierorgane höher als die mittleren oder vorderen Schleuderscheiben und deren zugeordnete Dosierorgane angeordnet sind, bei schwierigen auszubringenden Düngern eine ausreichend gleichmäßige Materialverteilung erreicht wird, kann zweckmäßig sein, daß die oberen Schleuderscheiben und die zugeordneten Dosierorgane unter einem Winkel von der Horizontalen abweichend nach unten geneigt angeordnet und/oder einstellbar sind. Es ist jedoch auch möglich, daß die unteren Schleuderscheiben und deren zugeordnete Dosierorgane unter einem Winkel von der Horizontalen abweichend nach oben geneigt angeordnet und/oder einstellbar sind.

In einer weiteren Ausführung ist vorgesehen, daß Schleuderscheiben und/oder Wurfschaufeln derart ausgebildet sind, daß sie die Materialpartikel mit einem Winkel zur Horizontalen nach schräg oben abschleudern.

Eine besonders gute individuelle Anpassung der Verteilorgane an die Materialeigenschaften der verschiedenen auszubringenden Materialien läßt sich dadurch erreichen, daß die auf den Schleuderscheiben angeordneten Wurfschaufeln mit unterschiedlichen Winkeln zur Horizontalen einstellbar angeordnet sind.

Selbstverständlich läßt sich mit diesem Schleuderstreuer auch das Grenzstreuen, bei dem zur Feldgrenze eine Streugutverteilung mit steil abfallender Streustärke erwünscht ist, durchführen. Hierzu sind entsprechende Grenzstreuplatten, Grenzstreuwurfschaufeln oder andere bekannte Vorrichtungen zum Grenzstreuen vorgesehen. Auch ist es möglich, die Drehzahl der Schleuderscheiben entsprechend zu variieren; d.h., daß die der Grenze benachbarte Schleuderscheibe mit einer geringeren Drehzahl als die anderen Schleuderscheiben angetrieben werden. Es ist auch möglich, den gesamten Streuer oder einzelne Schleuderscheiben zum Grenzstreuen schräg zu stellen.

Ein möglichst kompakt bauender Schleuderstreuer mit einer möglichst günstigen Schwerpunktlage wird durch die kennzeichnenden Merkmale des Anspruches 1 geschaffen. Infolge dieser Maßnahmen können die in unterschiedliche Ebene angeordneten Schleuderscheiben relativ dicht zusammengeschoben werden, so daß sich eine kompakte Bauweise ergibt.

In einer bevorzugten Ausführungsform ist vorgesehen, daß die unteren Trichterenden der Vorratsbehälter auf gleicher Höhe liegen, daß zwischen den Trichterenden, welche den unteren Schleuderscheiben zugeordnet sind, und den unteren Schleuderscheiben Materialzuleitungselemente angeordnet sind, die in einem geringen Abstand oberhalb der umlaufenden Teile der Schleuderscheiben enden. Hierdurch wird in vorteilhafter Weise den unteren Schleuderscheiben das Material zugeleitet. Eine vorteilhafte Ausbildung der Materialzuleitungselemente ergibt sich dadurch, daß diese als Zuleitungsschächte ausgebildet sind. Um sicher zu stellen, daß ein stetiger Materialzulauf zu dem unteren Ende des Zuleitungsschachtes gegeben ist und sich keine Verstopfungen in dem Zuleitungsschacht ergeben, ist vorgesehen, daß der Zuleitungsschacht sich stetig nach unten erweitert.
Es ist jedoch auch möglich, die Materialzuleitungselemente als Förderbänder etc. auszubilden.

Eine besonders gute Dosierung des Materials auf die unteren Schleuderscheiben ergibt sich dadurch, daß am unteren Ende des Zuleitungsschachtes sich jeweils ein Dosierorgan mit zugeordnetem Rührelement befindet.

Um einen guten Ausfluß des Materials aus dem Bereich im unteren Trichterende des Vorratsbehälters sicher zu stellen, ist vorgesehen, daß jeweils im unteren Bereich des Trichterendes ein Rührelement angeordnet ist.

Eine vorteilhafte Anordnung der Zuleitungsschächte ergibt sich dadurch, daß der Zuleitungsschacht von dem unteren Ende des vorderen Behälters schräg nach hinten und nach unten gerichtet ist.

Bei einem Schleuderdüngerstreuer, bei dem ein mittlerer Vorratsbehälter und zwei seitlich zu dem mittleren Vorratsbehälter angeordnete Vorratsbehälter vorgesehen sind, wobei dem mittleren Vorratsbehälter die unteren Schleuderscheiben und den seitlichen Vorratsbehältern die oberen Schleuderscheiben zugeordnet sind, ist vorgesehen, daß die Zuleitungsschächte von den Trichterenden des mittleren Vorratsbehälters zur Seite und nach unten geführt sind.

Die Rührorgane in den Zuleitungsschächten können von den Schleuderscheibenwellen antreibbar sein. Es ist jedoch auch ein anderer, beispielsweise hydraulischer Antrieb denkbar.

Vorteilhaft ausgebildete Dosierorgane für den eingangs beschriebenen Schleuderstreuer werden durch die kennzeichnenden Merkmale des Anspruches 1 geschaffen. Infolge dieser Maßnahmen werden in überraschend einfacher Weise einfach ausgebildete Dosierorgane für einen Mehrsortendüngerstreuer geschaffen.

Eine vorteilhafte Anordnung der Schieber und Anschlagelemente wird dadurch erreicht, daß die jeweiligen Schieber- und Anschlagelemente und die den Einstellelementen zugeordneten Einstellskalen zumindest teilweise seitlich des Vorratsbehälters angeordnet sind. Hierdurch wird eine gute Zugänglichkeit zu diesen Elementen und Einstellskalen, auch bei Schleuderdüngerstreuern, bei denen die Vorratsbehälter und die Dosierorgane sowie die Schleuderscheiben hintereinander angeordnet sind, geschaffen.

Desweiteren hat sich als vorteilhaft herausgestellt, daß die Dosierorgane als Auslauföffnungen und die Auslauföffnungen verschließbare und einstellbare Schieber mit zugeordneten einstellbaren Elementen zur Bestimmung der Öffnungsweite der Auslauföffnungen ausgebildet sind, und daß den Schiebern elektrisch und/oder elektronisch betätigbare und steuerbare Einstellelemente zugeordnet sind.

Hierbei ist vorteilhaft, wenn die Schieber gleichzeitig und/oder unabhängig voneinander verstellbar sind. Hierdurch ist es möglich, sowohl eine Teilbreitenschaltung zu realisieren wie auch eine gezielte Anpassung der Materialausbringmenge an die Nährstoffversorgung des Bodens oder den entsprechenden Nährstoffbedarf des Bodens teilflächenspezifisch vorzunehmen.

Hierbei ist vorgesehen, daß in der Regeleinrichtung teilflächenspezifisch die Nährstoffversorgung des Bodens oder der entsprechenden Nährstoffbedarf des Bodens abgespeichert ist, und daß in Abhängigkeit dieser abgespeicherten Daten in Verbindung mit einer Standortbestimmungseinrichtung (DGPS) automatisch eine entsprechende Einstellung der Dosierorgane erfolgt.

Eine besonders vorteilhafte Ausbildung der Dosierorgane und der Verteilorgane ergibt sich durch die Merkmale des Anspruches 8. Infolge dieser Maßnahmen werden Dosierorgane und Verteilelemente von Düngerstreuern aus Großserien eingesetzt. Durch die Übernahme dieser sich in Großserien bewerten Bauteile werden enorme Kosten bei der Entwicklung eines Mehrsortendüngerstreuers eingespart, weil sämtliche Zuordnungen und Einstellungen von der Großserienmaschine übernommen werden. Weiterhin ist vorteilhaft, daß hierdurch spätere Betreuungs- und Folgekosten eingespart werden, weil direkt die Einstelldaten der Großserienmaschinen übernommen bzw. übertragen werden können. Hierbei ist auch von Vorteil, daß auf die Daten aus Datenbanken zurückgegriffen werden kann, aufgrund welcher Einstellempfehlungen für die Einstellung der Maschine gegeben werden können. Dieses bedeutet, daß keine aufwendigen Entwicklungen der Zuordnung von Dosierorgan zu Verteilorgan durchgeführt und die entsprechenden Einstellungen für die Dosier- und Verteilorgane nicht ermittelt werden müssen.

Weiterhin ist vorgesehen, daß Dosierorgane mit verschiedenartigen Betätigungselementen von Schleuderdüngerstreuers aus Großserien an den Vorratsbehältern anbringbar sind. Hierdurch kann der Düngerstreuer entsprechend den individuellen Wünschen des Landwirtes einfach ausgerüstet werden.

Dadurch, daß die Lage der Auslauföffnungen zu den als Schleuderscheiben ausgebildeten Verteilorganen entsprechend der Ausbildung der Dosierorgane von Schleuderdüngerstreuern aus Großserien entspricht, können diese Bauteile einfach auf den erfindungsgemäßen Schleuderstreuer übertragen werden.

Als besonders vorteilhaft hat sich bei Versuchen gezeigt, daß bei Schleuderdüngerstreuern, bei denen die äußeren oder hinteren Schleuderscheiben und die zugeordneten Dosierorgane höhe als die mittleren oder vorderen Schleuderscheiben und deren zugeordneten Dosierorgane angeordnet sind, die Schleuderscheiben und/oder die Wurfschaufeln derart ausgebildet sind, daß sie die Düngerpartikel mit einem Winkel zur Horizontalen nach schräg oben abschleudern.

Um bei Schleuderdüngerstreuern, bei denen die äußeren oder hinteren Schleuderscheiben und die zugeordneten Dosierorgane höher als die mittleren oder vorderen Schleuderscheiben und deren zugeordnete Dosierorgane angeordnet sind, bei schwierigen auszubringenden Düngern eine ausreichend gleichmäßige Materialverteilung erreicht wird, kann zweckmäßig sein, daß die oberen Schleuderscheiben und die zugeordneten Dosierorgane unter einem Winkel von der Horizontalen abweichend nach unten geneigt angeordnet und/oder einstellbar sind. Es ist jedoch auch möglich, daß die unteren Schleuderscheiben und deren zugeordnete Dosierorgane unter einem Winkel von der Horizontalen abweichend nach oben geneigt angeordnet und/oder einstellbar sind.

In einer weiteren Ausführung ist vorgesehen, daß Schleuderscheiben und/oder Wurfschaufeln derart ausgebildet sind, daß sie die Materialparikel mit einem Winkel zur Horizontalen nach schräg oben abschleudern.

Eine besonders gute individuelle Anpassung der Verteilorgane an die Materialeigenschaften der verschiedenen auszubringenden Materialien läßt sich dadurch erreichen, daß die auf den Schleuderscheiben angeordneten Wurfschaufeln mit unterschiedlichen Winkeln zur Horizontalen einstellbar angeordnet sind.

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten und in Prinzipdarstellung,
- Fig.2: den Schleuderdüngerstreuer gemäß Fig.1 in Seitenansicht und in Prinzipdarstellung,
- Fig.3: einen weiteren Schleuderdüngerstreuer in der Ansicht von hinten und in Prinzipdarstellung und
- Fig.4: den Schleuderdüngerstreuer gemäß Fig.3 in Seitenansicht.

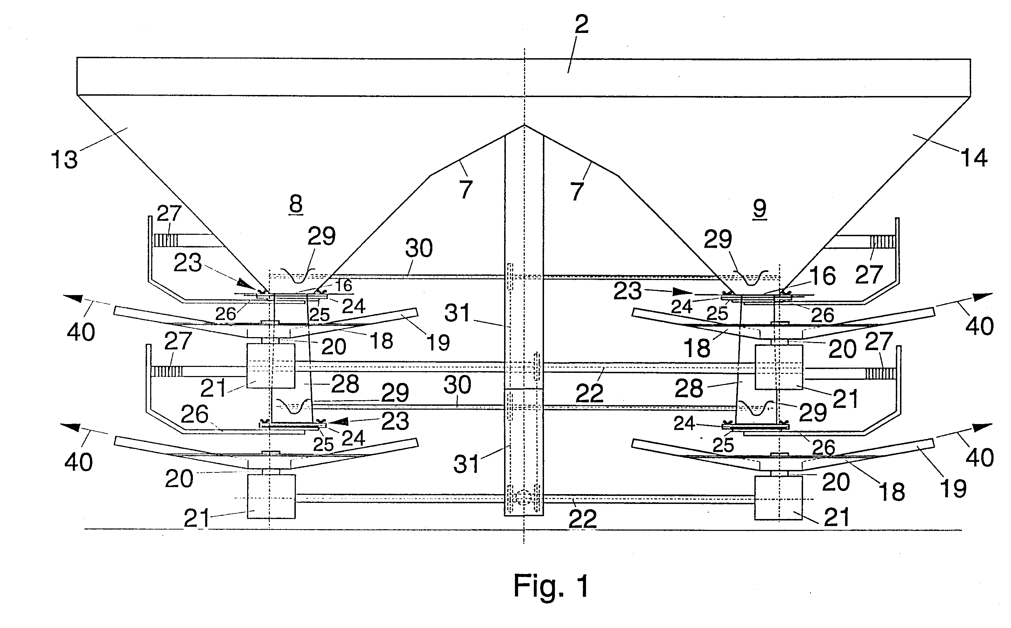

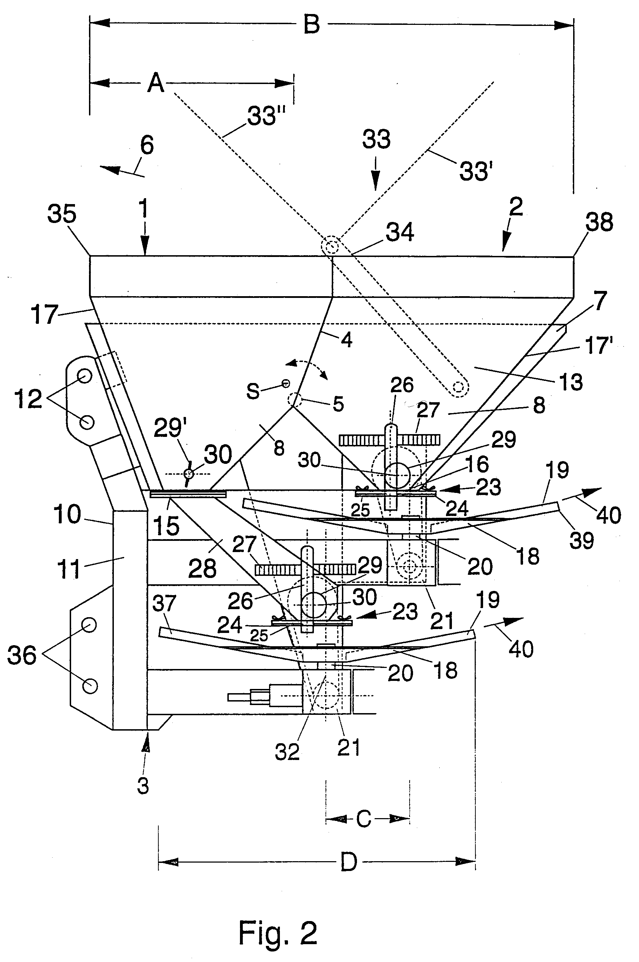

Der Schleuderdüngerstreuer gemäß den Fig.1 und 2 weist die beiden hintereinander angeordneten Vorratsbehälter 1 und 2 sowie den Rahmen 3 auf. Der Rahmen 3 ist in Fig.1 aus Gründen der Übersichtlichkeit nicht dargestellt. Die beiden Vorratsbehälter 1 und 2 sind durch die Trennwand 4 voneinander getrennt, die wie mit gestrichelten Linien angedeutet, mittels eines mit durchbrochenen Linien dargestellten Gelenkes 5 schwenkbar zur Variation des Fassungsvermögens angeordnet sein kann. Diese zwischen den beiden Vorratsbehältern 1 und 2 trennende Trennwand 4 kann herausnehmbar, absenkbar oder wegklappbar angeordnet sein.

Die beiden Vorratsbehälter 1 und 2 sind durch das in Fahrtrichtung 6 sich erstreckende dachförmige Mittelteil 7 jeweils im unteren Bereich in die Auslauftrichter 8 bzw. 9 aufgeteilt. Auf der Vorderseite 10 des vorderen Vorratsbehälters 1 ist ein den Schleuderdüngerstreuer tragender Dreipunktanbaurahmen 11, der Teil des Rahmens 3 ist, angeordnet. Aufgrund seiner durchgehenden Ausbildung liegt das dachförmige Mittelteil 7 der beiden Vorratsbehälter 1 und 2 liegt auf gleicher Höhe. Der obere Bereich des dachförmigen Mittelteils 7 ist auf seiner Vorderseite mit dem Dreipunktanbaurahmen 11 im Höhenbereich des oberen Dreipunktanlenkpunktes 12 des Dreipunktanbaurahmens 11 verbunden.

Die äußeren seitlichen Trichterwände 13 und 14 des vorderen Vorratsbehälters 1 und des hinteren Vorratsbehälters 2 fluchten miteinander, wie Fig.1 zeigt. Die unteren Trichterenden 15 und 16 der vorderen und hinteren Vorratsbehälter 1 und 2 liegen auf gleicher Höhe, wie Fig.2 zeigt. Die Vorderwand 17 des vorderen Vorratsbehälters 1 kann steiler als die Rückwand 17' des hinteren Vorratsbehälters 2 angeordnet sein.
Jedem unteren Trichterende 15 und 16 der Vorratsbehälter 1 und 2 ist eine Schleuderscheibe 18 mit darauf angeordneten Wurfschaufeln 19 zugeordnet. Die Wurfschaufeln 19 können in Scheibenebene mit unterschiedlichen Winkeln zur Radialen eingestellt werden, um so durch die unterschiedliche Winkelanstellung der Wurfschaufeln 19 für unterschiedliche Materialsorten und Arbeitsbreiten eine gleichmäßige Düngerverteilung erzielen zu können.

Weiterhin kann vorgesehen sein, daß verschieden ausgebildete Wurfschaufel- oder Schleuderscheibensätze zur Anpassung an verschiedene Arbeitsbreiten- und Streubreitenbereiche zum Einsatz kommen.

Die Schleuderscheiben 18 sind aus diesem Grunde auswechselbar auf ihren Antriebswellen 20 angeordnet. Die Schleuderscheiben 18 werden über Winkelgetriebe 21 von der Schlepperzapfwelle und über Getriebezüge 22 angetrieben. Es ist jedoch auch möglich, die Schleuderscheiben 18 mittels Hydraulikmotoren anzutreiben.

Den Trichterenden 15 und 16 sind Dosierorgane 23 zugeordnet. Den Trichterenden 16 des hinteren Vorratsbehälters 2 sind als Bodenplatten 24 mit Auslauföffnungen, die über Schieber 25 in ihrer Öffnungsweite einzustellen und zu verschließen sind, ausgebildete Dosierorgane zugeordnet. Die Schieber 25 können mittels Einstellelementen verstellt werden. Die Öffnungsweite läßt sich über Anschlagelemente 26, die mit Skalen 27 zusammenwirken, festlegen. Es ist auch möglich, die Schieber 25 mittels elektrischer Einstellelemente elektronisch einzustellen.

Den vorderen Trichterenden 15 ist jeweils ein das Material von den Trichterenden 15 zu den Schleuderscheiben 18 leitendes Leitelement 28 zugeorndet. Dieses Leitelement 28 ist als Zuführschacht mit an dessen unteren Enden angerodnetem Dosierorgan 23 ausgebildet. Der Zuführschacht 28 erweitert sich stätig nach unten. Dieses Dosierorgan 23 weist eine Bodenplatte 24 mit Auslauföffnung auf. Die Auslauföffnung ist über einen Schieber 25 in ihrer Öffnungsweite einstellbar und verschließbar. Die Schieber können mittels Einstellelementen verstellt werden. Die Öffnungsweite läßt sich über Anschlagelemente 26, die mit Skalen 27 zusammenwirken, einstellen. Es ist auch möglich, die Schieber 25 mittels elektronischer Einstellelemente elektrisch einzustellen.

Es ist jedoch auch möglich, das Dosierorgan 23 zwischen den Trichterenden 15 und dem Leitelement 28 anzuordnen. Das Leitelement kann auch als Förderband, etc. ausgebildet sein.
Oberhalb jeder Bodenplatte 24 ist jeweils ein Rührorgan 29 auf einer Rührwelle 30 angeordnet. Auch dem vorderen Trichterende 15 ist eine Rührwelle 30 mit Rührelementen 29' zugeordnet. Die Rührwellen 29 werden über einen Antrieb 31 in bekannter und daher nicht näher erläuterter Weise angetrieben.

Die Drehachsen 32 der unteren Schleuderscheiben 18 befinden sich in Seitansicht gesehen etwa in der Mitte zwischen den unteren Trichterenden 15 und 16 der beiden Vorratsbehälter 1 und 2.

Oberhalb der die beiden Vorratsbehälter 1 und 2 trennenden Trennwand 4 kann eine das Befüllen der Vorratsbehälter 1 und 2 erleichternde Rutsche 33 angeordnet sein. Diese Rutsche 33 ist zum Befüllen der jeweiligen Vorratsbehälter in die Stellung 33' oder in die Stellung 33'' bringbar. Die Rutsche 33 ist an Schwenkelementen 34 befestigt, um die Rutsche 33 auch in einen Bereich hinter den Vorratsbehälter 2 bringen zu können.

Die vordere obere Kante 35 des Vorratsbehälters 1 sowie die Unter- 36 und Oberlenkeranschlüsse 12 des Dreipunktanbaurahmens 11 verlaufen zumindest annähernd in einer senkrechten Ebene, die durch die vorderen Punkte 37 des größmöglichen Schaufelendenumlaufkreises der unteren Schleuderscheibe 18 verläuft. Die hintere Kante 38 des hinteren Vorratsbehälters 2 liegt bezogen auf die Fahrtrichtung 6 vor dem hintersten Punkt 39 des größtmöglichen Schaufelendenumlaufkreises der Schleuderscheibe 18. Hierdurch ergibt sich eine sehr kompakte Bauweise des Schleuderdüngerstreuers. Der Abstand A des Schwerpunktes S des Schleuderdüngerstreuers zu den Unterlenkeranschlüssen 36 beträgt zumindest annähernd die Hälfte des größtmöglichen Durchmessers D des Schaufelendenumlaufkreises der unteren Schleuderscheibe 18. Der größtmögliche Durchmesser D des Wurfschaufelendenumlaufkreises beträgt etwa 1480 mm. Desweiteren entspricht der größtmögliche Durchmesser D des Wurfschaufelumlaufkreises zumindest annähernd der Vorratsbehältererstreckung B des Schleuderdüngerstreuers in Fahrtrichtung 6 gesehen. Der Schwerpunktabstand A zu den Unterlenkeranschlußelementen 36 beträgt etwa zwischen 60 und 80 cm, vorzugsweise etwa 70 bis 75 cm. Der Abstand C zwischen den Schleuderscheibenantriebswellen 20 der unteren und oberen Schleuderscheiben 18 ist in Fahrtrichtung 6 gesehen um zumindest das 0,7-fache kleiner als der größtmögliche Durchmesser D des Wurfschaufelendenumlaufkreises der Schleuderscheiben 18.

Die das Material auf die unteren Schleuderscheiben 18 leitenden Zulaufschächte 28 enden unterhalb der oberen Schleuderscheiben 18 innerhalb der von den äußeren Teilen dieser Schleuderscheiben 18 beschriebenen Umlaufbahnen. Diese als Materialzuleitungselemente ausgebildeten Zulaufschächte 28 enden in einem geringen Abstand oberhalb der umlaufenden Teile der unteren Schleuderscheibe 28. Der jeweilige Zuleitungsschacht 28 erweitert sich stetig nach unten, um eine Materialverstopfung innerhalb des Zuleitungsschachtes 28 zu vermeiden. Der Zuleitungsschacht 28 ist von den unteren Trichterenden 15 des vorderen Vorratsbehälters 1 schräg nach hinten und unten gerichtet.

Die Rührorgane 29, 29' in den Zuleitungsschächten 28 und in den Vorratsbehältertrichterenden 15 und 16 können mechanisch oder hydraulisch angetrieben werden. Es ist auch möglich, die Rührorgane 29 von den Schleuderscheibenantriebswellen 20 anzutreiben.

Die auf einer Ebene angeordneten Schleuderscheiben 18 können derart angetrieben sein, daß sie auf ihren einander zugekehrten Seite in Fahrtrichtung 6 nach hinten auseinander oder auf ihren einander zugekehrten Seite in Fahrtrichtung 6 gesehen nach vorne auseinander drehend angetrieben sind.

Wie bereits vorerwähnt, sind die Dosierorgane 23 als Auslauföffnungen und die Auslauföffnungen verschließbare und einstellbare Schieber 25 mit zugeordneten einstellbaren Anschlagelementen 26 zur Bestimmung der Öffnungsweite der Auslauföffnungen ausgebildet. Die den jeweiligen Schiebern 25 und Anschlagelemente 26 und die den Einstellelementen 27 zugeordneten Einstellskalen sind seitlich des Vorratsbehälters 2 bzw. der Zulaufschächte 28 angeordnet.

Anstelle der Anschlagelemente 26 und Skalen 27 zur Bestimmung der Öffnungsweite der Auslauföffnungen können auch an den Schiebern 25 angreifende elektrische Stellelemente vorgesehen sein. Diese Stellelemente sind elektronisch ansteuerbar. Die einzelnen Schieber 25 der verschiedenen Dosierorgane 23 sind gleichzeitig oder unabhängig voneinander einstellbar, so daß jeder Schleuderscheibe 18 die gleiche oder verschiedene Materialmengen zuführbar sind.

Die die Dosierorgane 23 einstellende elektronische Regeleinrichtung ist derart ausgebildet, daß die Dosierorgane 23 individuell einstellbar sind. In der Regeleinrichtung ist teilflächenspezifisch die Nährstoffversorgung des Bodens oder entsprechende Nährstoffbedarf des Bodens für den Pflanzenbestand abgespeichert. In Abhängigkeit dieser abgespeicherten Daten in Verbindung mit einer Standortbestimmungseinrichtung (DGPS) erfolgt automatisch eine entsprechende Einstellung der Dosierorgane 23.

Die Dosierorgane 23 entsprechen in ihrer Ausbildung und Zuordnung zu den als Schleuderscheiben 18 mit Wurfschaufeln 19 ausgebildeten Verteilorganen denen von Schleuderdüngerstreuern aus Großserien. An den Anschlußelementen an den Vorratsbehältertrichterenden 15 und 16 und den Auslaufschächten 28 sind Dosierorgane 23 mit verschiedenen Betätigungselemente von Schleuderdüngerstreuern aus Großserien an den Vorratsbehältern 1 und 2 anbringbar. Die Lage der Auslauföffnungen zu den als Schleuderscheiben 18 ausgebildeten Verteilorganen entsprechen der Ausbildung der Dosierorgane 23 von Schleuderdüngerstreuern aus Großserien. Die als Schleuderscheiben 18 ausgebildeten Verteilorgane sind entsprechend den Schleuderscheiben von Schleuderdüngerstreuern aus Großserien ausgebildet.

Die Schleuderscheiben 18 und die Wurfschaufeln 19 sind derart ausgebildet, daß Sie die Düngerpartikel mit einem Winkel zur Horizontalen nach schräg oben in Pfeilrichtung 40 abschleudern.

Es ist jedoch auch möglich, die oberen Scheuderscheiben und die diesen zugeordneten Dosierorganen unter einem Winkel von der Horizontalen abweichend nach unten geneigt anzuordnen bzw. einzustellen, auszubilden. Weiterhin ist es möglich, die unteren Schleuderscheiben und zugeordneten Dosierorgane unter einem Winkel von der Horizontalen abweichend nach oben geneigt anzuordnen bzw. einstellbar auszubilden.

Wie bereits eingangs erwähnt, ist der Schleuderdüngerstreuer zum Ausstreuen von zwei verschiedenen Düngersorten ausgebildet. In dem vorderen Vorratsbehälter 1 wird eine andere Düngersorte als in den hinteren Vorratsbehälter 2 eingefüllt. Die beiden oberen Schleuderscheiben 18 schleudern die Materialpartikel der sich in dem hinteren Vorratsbehälter 2 befindlichen Düngersorte über den gleichen Arbeitsbreitenbereich wie die unteren Schleuderscheiben 18, die die Materialpartikel der sich in dem vorderen Vorratsbehälter 1 befindlichen Düngersorte abschleudern. Wie bereits erwähnt, kann die jeder Schleuderscheibe 18 zugeführte Materialmenge individuell gleich oder unterschiedlich über die Dosierorgane 23 eingestellt werden.

Beim gleichzeitigen Ausbringen von zwei verschiedenen Düngersorten sind derartige Schleuderscheiben 18 und Wurfschaufeln 19 vorgesehen, daß jede Düngersorte in zwei aneinander angrenzenden und teilweise überlappenden Arbeitsbreitenstreifenbereichen ausgestreut wird.

Es ist jedoch auch möglich, mit dem Schleuderdüngerstreuer eine einzige Materialsorte auszustreuen. Hierzu wird in beiden Vorratsbehältern 1 und 2 die gleiche Materialsorte eingeführt. Hierbei ist es dann möglich, derartige Schleuderscheiben 18 und Wurfschaufeln 19 vorzusehen, daß der Dünger in vier einander angrenzenden und teilweise überlappenden Arbeitsbreitenstreifen ausgestreut wird. Hier kann dann in vier Arbeitsstreifen individuell die Düngerausbringung angepaßt und eingestellt werden.

Bei dem Ausstreuen einer einzigen Düngersorte bestreuen die oberen Schleuderscheiben 18 den inneren Arbeitsbreitenbereich und die unteren Schleuderscheiben 18 den äußeren Arbeitsbreitenbereich.

Es ist jedoch auch möglich, daß für das Ausstreuen einer einzigen Düngersorte die oberen Schleuderscheiben 18 den äußeren Arbeitsbreitenbereich und die unteren Schleuderscheiben 18 den inneren Arbeitsbreitenbereich bestreuen. Hierzu ist es dann lediglich erforderlich, entsprechende Schleuderscheiben 18 bzw. Wurfschaufeln 19 einzusetzen.

Für das Ausstreuen einer einzigen Düngersorte sind andere Schleuderscheiben 18 und/oder Wurfschaufelsätze 19 als für das Ausstreuen von zwei Düngersorten vorgesehen.

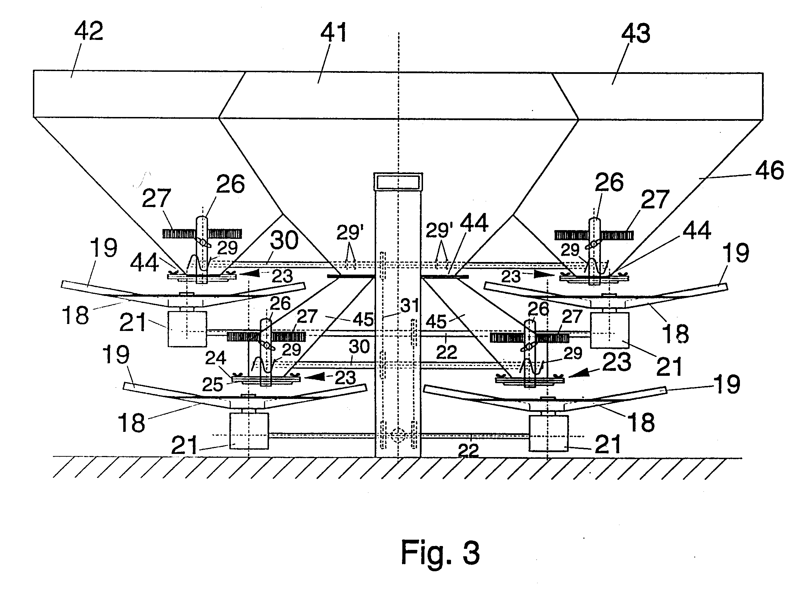

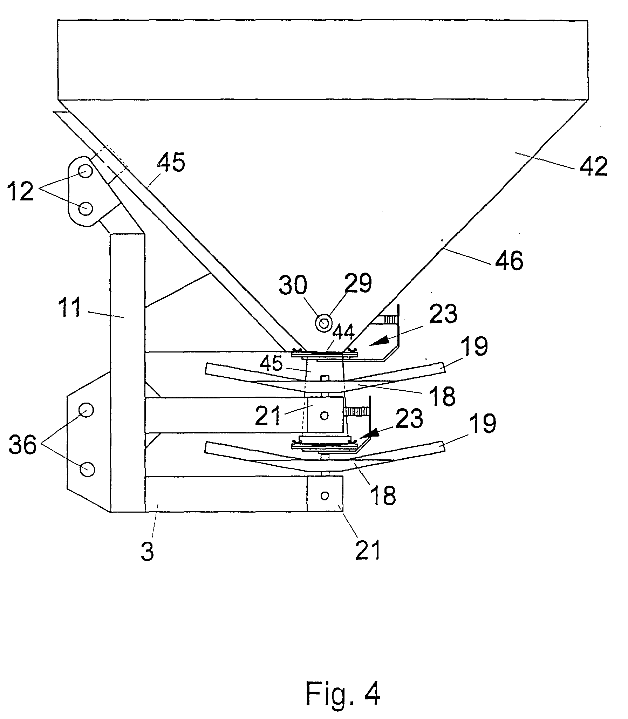

Der Schleuderdüngerstreuer gemäß den Fig.3 und 4 unterscheidet sich von dem Schleuderdüngerstreuer gemäß den Fig.1 und 2 zunächst dadurch, daß die Vorratsbehälter 41, 42 und 43 nicht hintereinander sondern nebeneinander angeordnet sind. Hierbei ist ein mittlerer Vorratsbehälter 41 und zwei seitlich zu dem mittleren Vorratsbehälter 41 angeordnete Vorratsbehälter 42 und 43 vorgesehen. Die unteren Trichterenden 44 der Vorratsbehälter 41, 42 und 43 liegen auf gleicher Höhe. Die vorderen und hinteren Trichterwände 45 und 46 der Vorratsbehälter 41, 42 und 43 fluchten in Seitenansicht gesehen miteinander.

Den unteren Enden 49 der Vorratsbehälter 41, 42 und 43 sind Dosierorgane 23 zugeordnet, die das Material den diesen Vorratsbehältern 41, 42 und 43 zugeordneten Schleuderscheiben 18, die mit Wurfschaufeln19, die in Scheibenebene in unterschiedlichen Winkelanstellung einstellbar sind, zuführen. Die den äußeren Vorratsbehältern 42 und 43 zugeordneten Schleuderscheiben 18 sind höher angeordnet als die dem mittleren Vorratsbehälter 41 zugeordneten Schleuderscheiben 18. Die den unteren Trichterenden 44 des mittleren Vorratsbehälters 41 zugeordneten Schleuderscheiben 18 sind die das von den unteren Trichterenden 44 zu den unteren Schleuderscheiben 18 leitenden und als Zuleitungsschächte 45 ausgebildete Leitelemente zugeordnet. An dem unteren Ende jedes Zuleitungsschachtes 45 befindet sich ein Dosierorgan 23. Die Zuleitungsschächte 45 sind von den Trichterenden 44 des mittleren Vorratsbehälters 41 zur Seite und nach unten geführt.

Die Dosierorgane 23 entsprechen der Dosierorgane gemäß dem Schleuderstreuer in Fig.1 und 2.
Die das Material auf die unteren Schleuderscheiben 18 leitenden Zuleitungsschächte 44 enden unterhalb der oberen Schleuderscheiben 18 innerhalb der von den äußeren Teilen dieser Schleuderscheibe 18 beschriebenen Umlaufbahnen.

## Patentansprüche

1. Verfahren zum Ausbringen einer einzigen Düngersorte oder von gleichzeitig mehreren Düngersorten mit einem Schleuderstreuer, der zumindest zwei Vorratsbehälter (1, 2, 41, 42, 43) mit zumindest vier Dosierorganen(23) , denen jeweils eine Schleuderscheibe (18) zugeordnet ist, aufweist, wobei die Schleuderscheiben (18) gegen anders ausgebildete Schleuderscheiben und/oder die auf den Schleuderscheiben (18) angeordneten Wurfschaufeln gegen anders ausgebildete Wurfschaufeln (19) auswechselbar und/oder austauschbar sind, wobei die Dosierorgane (23) mittels Stellorganen gemeinsam oder unabhängig voneinander verstellbar sind, dadurch gekennzeichnet, daß beim Ausbringen einer Düngersorte derartige Schleuderscheiben (18) und/oder Wurfschaufeln (19) vorgesehen sind, daß der Dünger in vier aneinander angrenzenden und teilweise überlappenden Arbeitsbreitenstreifen ausgestreut wird, und daß beim gleichzeitigen Ausbringen von zwei verschiedenen Düngersorten derartige Schleuderscheiben (18) und/oder Wurfschaufeln (19) vorgesehen sind, daß jede Düngersorte in zwei aneinander angrenzenden und teilweise überlappenden Arbeitsbreitenstreifen ausgestreut wird.

2. Verfahren nach Anspruch 1, dadurch gekennzeichnet, daß für das Ausstreuen einer einzigen Düngersorte die oberen Schleuderscheiben (18) den inneren Arbeitsbreitenbereich und die unteren Schleuderscheiben (18) den äußeren Arbeitsbreitenbereich bestreuen.

3. Verfahren nach Anspruch 1, dadurch gekennzeichnet, daß für das Ausstreuen einer einzigen Düngersorte die oberen Schleuderscheiben (18) den äußeren Arbeitsbreitenbereich und die unteren Schleuderscheiben (18) den inneren Arbeitsbreitenbereich bestreuen.

4. Verfahren nach einem oder mehreren der vorstehenden Ansprüche, dadurch gekennzeichnet, daß für das Ausstreuen einer einzigen Düngersorte andere Schleuderscheiben- und/oder Wurfschaufelsätze als für das Ausstreuen von zwei Düngersorten vorgesehen sind.

5. Schleuderdüngerstreuer, insbesondere mit zumindest zwei Vorratsbehältern für die getrennte Mitführung von zumindest zwei verschiedenen Düngersorten, wobei jedem Vorratsbehälter jeweils zumindest zwei eigene Dosier- und Verteilorgane zugeordnet sind, dadurch gekennzeichnet, daß die Dosierorgane (23) als Auslauföffnungen und die Auslauföffnungen verschließbare und einstellbare Schieber (25) mit zugeordneten einstellbaren Elementen (26) zur Bestimmung der Öffnungsweite der Auslauföffnungen ausgebildet sind, daß die Dosierorgane (23) in ihrer Ausbildung und Zuordnung zu den Verteilorganen denen von Schleuderdüngerstreuern aus Großserien entsprechen.

6. Schleuderdüngerstreuer nach Anspruch 1 und/oder 5, dadurch gekennzeichnet, daß Dosierogane (23) mit verschiedenartigen Betätigungselementen von Schleuderdüngerstreuern aus Großserien an den Vorratsbehältern anbringbar sind.

7. Schleuderdüngerstreuer nach Anspruch 1 und/oder 5, dadurch gekennzeichnet, daß die Lage der Auslauföffnungen zu den als Schleuderscheiben (18) ausgebildeten Verteilorganen entsprechend der Ausbildung der Dosierorgane (23) von Schleuderdüngerstreuern aus Großserien entspricht.

8. Schleuderdüngerstreuer nach Anspruch 1 und/oder 5, dadurch gekennzeichnet, daß die als Schleuderscheiben (18) ausgebildeten Verteilorgane entsprechend den Schleuderscheiben von Schleuderdüngerstreuern aus Großserien ausgebildet sind.

9. Schleuderdüngerstreuer nach Anspruch 1 und/oder 5, wobei die äußeren oder hinteren Schleuderscheiben und die zugeordneten Dosierorgane höher als die mittleren oder vorderen Schleuderscheiben und deren zugeordnete Dosierorgane angeordnet sind, dadurch gekennzeichnet, daß die oberen Schleuderscheiben und die zugeordneten Dosierogane unter einem Winkel von der Horizontalen abweichend nach unten geneigt angeordnet und/oder einstellbar sind.

10. Schleuderdüngerstreuer nach Anspruch 1 und/oder 5, wobei die äußeren oder hinteren Schleuderscheiben und die zugeordneten Dosierorgane höher als die mittleren oder vorderen Schleuderscheiben und die zugeordneten Dosierorganen angeordnet sind, dadurch gekennzeichnet, daß die unteren Schleuderscheiben und zugeordneten Dosierorgane unter einem Winkel von der Horizontalen abweichend nach oben geneigt angeordnet und/oder einstellbar sind.

11. Schleuderdüngerstreuer nach Anspruch 1 und/oder 5, dadurch gekennzeichnet, daß die auf den Schleuderscheiben (18) angeordneten Wurfschaufeln (19) mit unterschiedlichen Winkeln zur Horizontalen einstellbar angeordnet sind.

12. Schleuderdüngerstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene Verteilorgane zugeordnet sind, wobei das jeweilige Dosierorgan dem ihm zugeordneten Verteilorgan den auszubringenden Dünger in einstellbarer Weise zuleitet, wobei die verschiedenen Düngersorten von jeweils verschiedenen Verteilorganen verteilt werden, wobei die die verschiedenen Düngersorten verteilenden Verteilorganen in unterschiedlichen Höhen zueinander angeordnet sind, dadurch gekennzeichnet, daß die das Material auf die unteren Schleuderscheiben (18) leitende Elemente (28, 45) unterhalb der oberen Schleuderscheiben (18) innerhalb der von den äußersten Teilen der Schleuderscheiben (18) beschriebenen Umlaufbahnen enden.

13. Schleuderdüngerstreuer nach Anspruch 12, dadurch gekennzeichnet, daß die unteren Trichterenden (16, 44) der Vorratsbehälter (1, 2, 41, 42, 43) auf gleicher Höhe liegen, daß zwischen den Trichterenden (16, 44), welche den unteren Schleuderscheiben (18) zugeordnet sind, und den unteren Schleuderscheiben (18) Materialzuleitungselemente (28, 45) angeordnet sind, die in einem geringen Abstand oberhalb der umlaufenden Teile der Schleuderscheiben (18) enden.

14. Schleuderdüngerstreuer nach einem oder mehreren der vorstehenden Ansprüche, dadurch gekennzeichnet, daß die Materialzuleitungselemente (16, 44) jeweils als Zuleitungsschacht ausgebildet sind.

15. Schleuderdüngerstreuer nach Anspruch 14, dadurch gekennzeichnet, daß der Zuleitungsschacht (16, 44) sich stetig nach unten erweitert.

16. Schleuderdüngerstreuer nach einem oder mehreren der vorstehenden Ansprüche, dadurch gekennzeichnet, daß am unteren Ende des Zuleitungsschachtes (16, 44) sich jeweils ein Dosierorgan (23) mit einem zugeordneten Rührelement (29) befindet.

17. Schleuderdüngerstreuer nach einem oder mehreren der vorstehenden Ansprüche, dadurch gekennzeichnet, daß jeweils im Bereich des unteren Trichterendes (16, 44) ein Rührelement (29') angeordnet ist.

18. Schleuderdüngerstreuer nach einem oder mehreren der vorstehenden Ansprüche, dadurch gekennzeichnet, daß die Rührelemente (29, 29') über ein hydraulischen oder mechanischen Antrieb (31) antreibbar sind.

19. Schleuderdüngerstreuer nach Anspruch 12, wobei die beiden Vorratsbehälter hintereinander angeordnet sind, dadurch gekennzeichnet, daß der Zuleitungsschacht (28) von dem unteren Trichterende (16) des vorderen Behälters (1) schräg nach hinten und unten gerichtet ist.

20. Schleuderdüngerstreuer nach Anspruch 12, wobei ein mittlerer Vorratsbehälter und zwei seitlich zu dem mittleren Vorratsbehälter angeordnete Vorratsbehälter vorgesehen sind, wobei dem mittleren Vorratsbehälter die unteren Schleuderscheiben und den seitlichen Vorratsbehältern die oberen Schleuderscheiben zugeordnet sind, dadurch gekennzeichnet, daß der Zuleitungsschacht (45) von den Trichterenden (44) des mittleren Vorratsbehälters (41) zur Seite und nach unten geführt sind.

21. Schleuderdüngerstreuer nach einem oder mehreren der vorstehenden Ansprüche, dadurch gekennzeichnet, daß die Rührorgane als horizontale Welle (30) mit darauf angeordneten Rührelementen (29, 29') ausgebildet sind.

22. Schleuderdüngerstreuer nach einem oder mehreren der vorstehenden Ansprüche 12 bis 20, dadurch gekennzeichnet, daß die Rührorgane (29) in den Zuleitungsschächten (28, 45) von den Schleuderscheibenwellen antreibbar sind.

23. Schleuderdüngerstreuer nach einem oder mehreren der vorstehenden Ansprüche, dadurch gekennzeichnet, daß die auf einer Ebene angeordneten Schleuderscheiben (18) auf ihren einander zugekehrten Seiten nach hinten auseinander drehend angetrieben sind.

24. Schleuderdüngerstreuer nach einem oder mehreren der vorstehenden Ansprüche 12 bis 22, dadurch gekennzeichnet, daß die auf einer Ebene angeordneten Schleuderscheiben (18) auf ihren einander zugekehrten Seiten in Fahrtrichtung (6) gesehen nach vorn auseinander drehend angetrieben sind.

25. Schleuderdüngerstreuer mit zumindest zwei in Fahrtrichtung gesehen hintereinander angeordneten Vorratsbehältern für die getrennte Mitführung von zumindest zwei verschiedenen Düngersorten, wobei jedem Vorratsbehälter jeweils zumindest zwei eigene Dosier- und Verteilorgane zugeordnet sind, dadurch gekennzeichnet, daß die Dosierorgane (23) als Auslauföffnungen und die Auslauföffnungen verschließbare und einstellbare Schieber (25) mit zugeordneten einstellbaren Anschlagelementen (26) zur Bestimmung der Öffnungsweiten der Auslauföffnungen ausgebildet sind.

26. Schleuderdüngerstreuer mit zumindest zwei in Fahrtrichtung gesehen hintereinander angeordneten Vorratsbehältern für die getrennte Mitführung von zumindest zwei verschiedenen Düngersorten, wobei jedem Vorratsbehälter jeweils zumindest zwei eigene Dosier- und Verteilorgane zugeordnet sind, insbesondere nach Anspruch 25, dadurch gekennzeichnet, daß die Dosierorgane (23) als Auslauföffnungen und die Auslauföffnungen verschließbare und einstellbare Schieber (25) mit zugeordneten einstellbaren Elementen (26, 27) zur Bestimmung der Öffnungsweite der Auslauföffnungen ausgebildet sind, daß dem Schieber (25) elektrisch und/oder elektronisch betätigbare und steuerbare Einstellelemente zugeordnet sind.

27. Schleuderdüngerstreuer nach einem oder mehreren der vorstehenden Ansprüche, dadurch gekennzeichnet, daß die Schieber (25) gleichzeitig und/oder unabhängig voneinander verstellbar sind.

28. Schleuderdüngerstreuer nach einem oder mehreren der vorstehenden Ansprüche, dadurch gekennzeichnet, daß eine elektronische Regeleinrichtung vorgesehen ist, mittels welcher die Dosierorgane (23) individuell einstellbar sind.

29. Schleuderdüngerstreuer nach einem oder mehreren der vorstehenden Ansprüche, dadurch gekennzeichnet, daß in der Regeleinrichtung teilflächenspezifisch die Nährstoffversorgung des Bodens oder der entsprechende Nährstoffbedarf des Bodens abgespeichert ist, und daß in Abhängigkeit dieser abgespeicherten Daten in Verbindung mit einer Standortbestimmungseinrichtung (DGPS) automatisch eine entsprechende Einstellung der Dosierorgane (23) erfolgt.
